# EUROPÄISCHE PATENTSCHRIFT

(11) **EP 2 755 837 B1**
(45) Veröffentlichungstag und Bekanntmachung des Hinweises auf die Patenterteilung: **08.08.2018**
(21) Anmeldenummer: 12766855.6
(22) Anmeldetag: 07.09.2012
(51) Int. Cl.: B60J 5/10, E05D 11/10

(54) **BETÄTIGUNGSVORRICHTUNG EINER ZWEIGETEILTEN AUFKLAPPBAREN FAHRZEUGHECKKLAPPE**
ACTUATION DEVICE FOR A DIVIDED HINGED VEHICLE TAILGATE
DISPOSITIF D'ACTIONNEMENT D'UN HAYON DE VÉHICULE RELEVABLE EN DEUX PARTIES

(30) Priorität: 12.09.2011 CZ 20110565
(43) Veröffentlichungstag der Anmeldung: 23.07.2014
(73) Patentinhaber: Skoda Auto A.S., 293 60 Mladá Boleslav (CZ)
(72) Erfinder: DEMEL, Jan, 294 04 Dolní Bousov (CZ)
(86) Internationale Anmeldenummer: PCT/CZ2012/000089
(87) Internationale Veröffentlichungsnummer: WO 2013/037330

(56) Entgegenhaltungen:
- EP-A1- 2 099 629
- EP-A2- 1 963 601
- WO-A1-2009/109155

## Beschreibung

### Technisches Gebiet

Die Erfindung betrifft eine Betätigungsvorrichtung der zweigeteilten aufklappbaren Fahrzeugheckklappe bestehend aus einer Sperrscheibe und einer Sperrplatte.

### Bisheriger Stand der Technik

In der Praxis ist aus dem Stand der Technik eine Verriegelungseinheit für die erste Klappe, zweite Klappe und den durch Fahrzeugkarosserie gebildeten Träger bekannt, die ein Verriegelungselement und eine antreibbare Betätigungsvorrichtung umfasst. Diese ist in der Patentschrift EP 1963601 beschrieben. EP 1 963 601 A2 offenbart den Oberbegriff des Anspruch 1.

In der Patentschrift EP 2099629 ist ein erneuertes Sicherungselement der Aufhängung der zweigeteilten aufklappbaren Fahrzeugheckklappe beschrieben. Aus der Schrift EP 2129539 ist dann die elektrische Betätigung der zweigeteilten aufklappbaren Fahrzeugheckklappe bekannt.

Der Nachteil der bekannten Lösung nach dem Stand der Technik ist die relativ lange Zeit (bis zu 2 Sekunden) für das Öffnen der kompletten zweigeteilten Heckklappe bestehend aus den miteinander gekoppelten ersten und zweiten Klappe, bzw. für das Verstellen des gesamten Mechanismus aus der ersten in die zweite Stellung.

Beim Verstellen des Mechanismus aus der ersten Stellung in die zweite Stellung ist der Mitnehmer in der Ausnehmung im oberen Bereich des Schenkels angeordnet. Beim Verstellen des Mechanismus aus der ersten Stellung in die zweite Stellung wirkt der Mitnehmer mit der Führungsfläche zusammen nicht. Beim Verstellen des Mechanismus aus der ersten Stellung in die zweite Stellung gibt es laut dem Stand der Technik eine Zwischenlage.

### Darstellung der Erfindung

Die Aufgabe wird durch die vorliegende erfindungsgemäße technische Lösung gelöst.

Die Erfindung liegt in der Innovation des Schenkels der Sperrscheibe, welche die Form eines Hakens mit einer Ausnehmung im oberen Teil des Schenkels hat, und der Sperrplatte, welche in ihrem Oberteil eine Führungsfläche aufweist, die als eine Verengung dieses oberen Teils ausgeführt ist. Diese an der Sperrplatte ausgebildete Führungsfläche hat nach vorliegender Erfindung die Funktion der an der Sperrscheibe angeordneten Führungsfläche nach dem oben genannten Stand der Technik übernommen.

In der zweiten Grundstellung kann nur die Kofferraumklappe geöffnet werden, nach dem Verstellen des Mechanismus in die erste Position kann die ganze aufklappbare Heckklappe geöffnet werden.

Beim Verstellen des Mechanismus aus der ersten Stellung in die zweite Stellung ist der Mitnehmer in der Ausnehmung im oberen Bereich des Schenkels angeordnet. Beim Verstellen des Mechanismus aus der ersten Stellung in die zweite Stellung wirkt der Mitnehmer mit der Führungsfläche zusammen. Die Zwischenlage ist entfallen.

Mit diesen Maßnahmen wird die Zeit des Verstellens des gesamten Mechanismus um bis zu eineinhalbe Sekunde verkürzt.

### Übersicht der Figuren der Zeichnungen

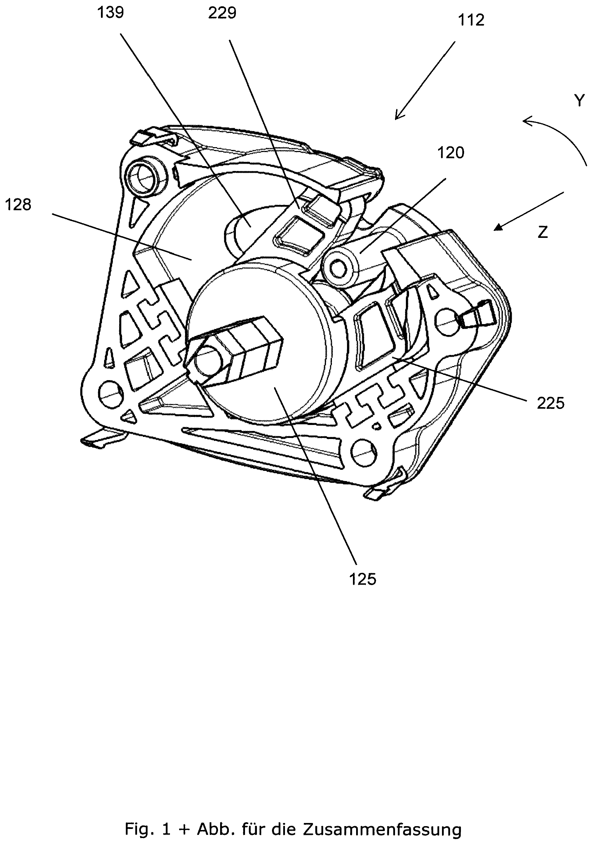

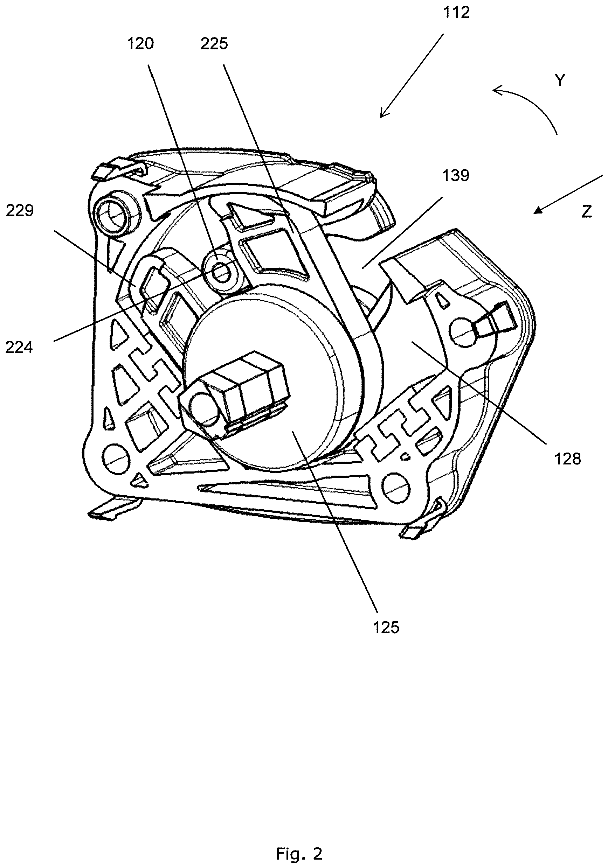

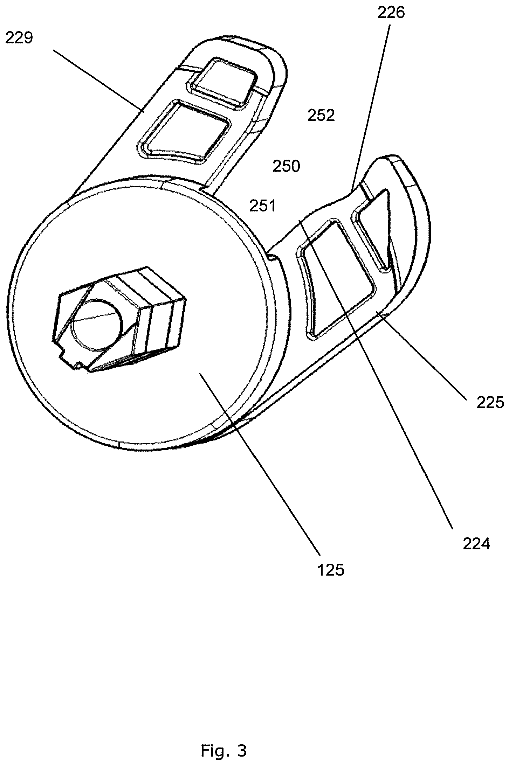

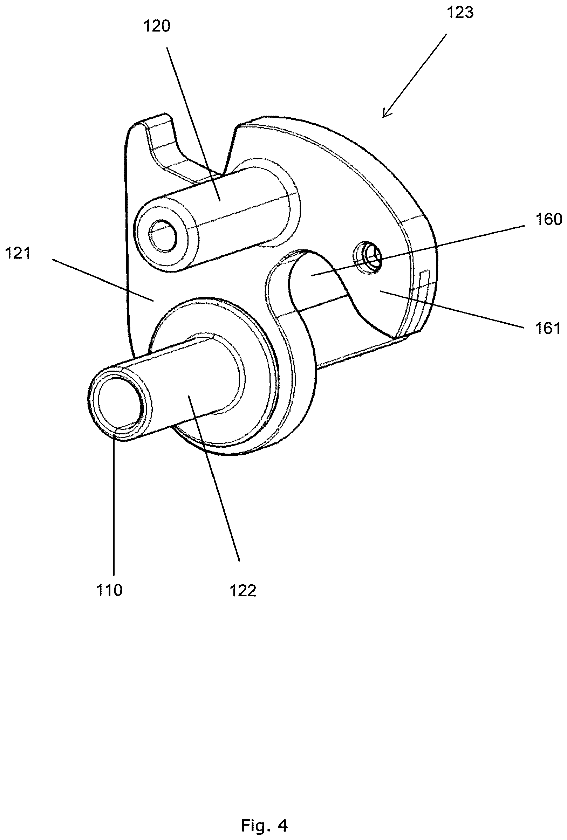

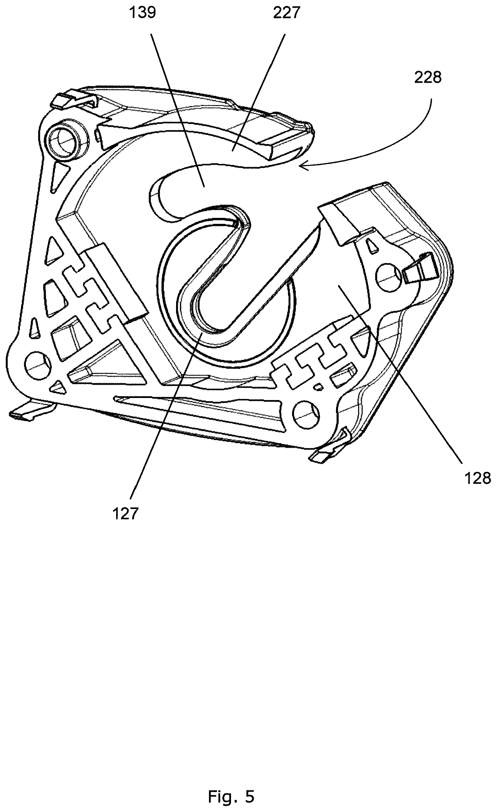

Die Erfindung wird anhand schematischer Zeichnungen näher erläutert, wobei die Fig. 1 eine perspektivische Ansicht der Bedienungsvorrichtung der zweigeteilten aufklappbaren Fahrzeugheckklappe in erster Stellung, die Fig. 2 eine perspektivische Ansicht der Bedienungsvorrichtung der zweigeteilten aufklappbaren Fahrzeugheckklappe in zweiter Stellung, die Fig. 3 eine perspektivische Ansicht der Sperrscheibe und die Fig. 4 eine perspektivische Ansicht des Nockenelements des Unterteils darstellt. Die Fig. 5 stellt eine perspektivische Ansicht der eigentlichen Sperrplatte dar.

### Ausführungsbeispiele der Erfindung

Die zweigeteilte aufklappbare Fahrzeugheckklappe umfasst die erste und zweite Klappe. Die erste Klappe ist als aufklappbare Fahrzeugheckklappe ausgestaltet, die schwenkbar um die Achse der aufklappbaren Heckklappe an der Karosserie gelagert ist.

Die zweite Klappe ist als eine Kofferraumklappe des Fahrzeuges ausgestaltet, die schwenkbar um die Achse der Kofferraumklappe an der aufklappbaren Heckklappe gelagert ist.

Der Träger ist als ein Fahrzeugkarosserieteil ausgebildet.

Die Verriegelungseinheit der ersten Klappe, der zweiten Klappe und des Trägers, bestehend aus dem an der ersten Klappe beweglich angeordneten Verriegelungselement mit dem Mitnehmer 120 und aus antreibbarer Betätigungsvorrichtung 112 für die Bewegung des Verriegelungselements. Das Verriegelungselement verbindet in der ersten Stellung die erste Klappe mit der zweiten Klappe in eine Einheit. In zweiter Stellung wird die feste Verbindung der ersten und zweiten Klappe gelöst und zugleich die erste Klappe mit dem Träger fest verbunden.

Das Verriegelungselement umfasst einen schwenkbar gelagerten Hebel 123, gebildet durch eine Strebe 121, einen Mitnehmer 120 und einen Führungsbolzen 122. Die Strebe 121 kann als Nockenelement ausgebildet werden. Der Mitnehmer 120 ist als Griff des Hebels 123 ausgebildet. In der zweiten Stellung ist die Schwenkachse 110 des Hebels 123 im Wesentlichen in der Richtung der verlängerten Achse 127 der Sperrscheibe orientiert.

Angesichts des Entfalls der Zwischenlage wurde auch die Form des Nockenelements am Unterteil modifiziert. Die Länge des gebogenen Endes 161 und somit auch der länglichen Ausnehmung 160 wurde verkürzt.

Die Betätigungsvorrichtung 112 umfasst eine schwenkbar am Träger angeordnete Sperrscheibe 125 und eine Sperrplatte 128 mit einer Ausnehmung 139, in die wenigstens partiell der Mitnehmer 120 eingreift.

Die Sperrscheibe 125 ist am Träger schwenkbar um die Achse 127 der Sperrscheibe gelagert.

Die Sperrscheibe 125 weist eine längliche Ausnehmung 250 mit einem ersten geschlossenen Ende 251 und einem zweiten offenen Ende 252 auf. Die längliche Ausnehmung wird durch die Schenkel 225, 229 mit im Wesentlichen ebenen Innenseiten gebildet.

In einer zweiten vorteilhaften Ausführung weist der Schenkel 225 der Sperrscheibe 125 die Form eines Hakens mit einer Absenkung 226 im oberen Teil des Schenkels 225 auf.

Beim Verstellen des Mitnehmers 120 aus der ersten in die zweite Stellung ist der Mitnehmer 120 an der Innenseite des Schenkels (225) angeordnet.

In der zweiten vorteilhaften Ausführung ist beim Verstellen des Mitnehmers 120 aus der ersten in die zweite Stellung der Mitnehmer 120 an der Innenseite des Schenkels (225) in der Absenkung 226 im oberen Bereich des Schenkels 225 angeordnet und anhand der Form der länglichen Ausnehmung 139 gleitet der Mitnehmer 120 an dem Schenkel 225 nach unten und in der zweiten Endstellung ist er an der Fläche 224 angeordnet.

Die Sperrplatte 128 weist im ihren oberen Bereich 227 eine Führungsfläche 228 auf, die als eine Verengung des Endes des oberen Bereichs 227 ausgeführt ist.

Der Mitnehmer 120 wirkt beim Verstellen der Sperrscheibe 125 mit dem Mitnehmer 120 aus der ersten in die zweite Stellung mit der Führungsfläche 228 zusammen.

Beim Verstellen der Sperrscheibe 125 mit dem Mitnehmer 120 aus der ersten in die zweite Stellung macht die Sperrscheibe 125 die Bewegungen in der Y- und Z-Richtung. Das bedeutet, dass die Sperrscheibe 125 in die zweite Stellung verstellt und zugleich hin zur Achse 127 angedrückt wird.

Die Betätigungsscheibe 125 wird mit einem Elektromotor angetrieben. Der Mitnehmer 120 wird aus der zweiten Stellung in die erste Stellung wieder mit der Betätigungsscheibe 125 beziehungsweise dem Schenkel 229 zurückversetzt.

## Patentansprüche

1. Betätigungsvorrichtung (112) einer zweigeteilten aufklappbaren Fahrzeugheckklappe, die eine am Träger schwenkbar angeordnete Sperrscheibe (125) und eine Sperrplatte (128) mit einer Ausnehmung (139) umfasst, in die wenigstens partiell ein Mitnehmer (120) eingreift, wobei die Sperrscheibe (125) die Schenkel (225, 229) aufweist, welche eine längliche Ausnehmung (250) mit einem offenen Ende (252) und einem geschlossenen Ende (251) bilden, **dadurch gekennzeichnet dass** die Sperrplatte (128) im ihren oberen Bereich (227) eine Führungsfläche (228) aufweist, die als eine Verengung des Endes des oberen Bereichs (227) ausgeführt ist, und wobei der Mitnehmer (120) beim Verstellen der Sperrscheibe (125) mit dem Mitnehmer (120) aus der ersten in die zweite Stellung ohne Zwischenlage mit der Führungsfläche (228) derart zusammenwirkt, dass die Sperrscheibe (125) die Bewegungen in der Y- und Z- Richtung macht, das heißt in die zweite Stellung verstellt (Y-Richtung) und zugleich hin zur Achse (127) der Sperrscheibe angedrückt (Z-Richtung) wird.

2. Betätigungsvorrichtung (112) einer zweigeteilten aufklappbaren Fahrzeugheckklappe nach Anspruch 1, **dadurch gekennzeichnet, dass** der Schenkel (225) der Sperrscheibe (125) die Form eines Hakens mit einer Absenkung (226) im oberen Teil des Schenkels (225) aufweist.

3. Betätigungsvorrichtung (112) einer zweigeteilten aufklappbaren Fahrzeugheckklappe nach Anspruch 1, **dadurch gekennzeichnet, dass** beim Verstellen der Sperrscheibe (125) mit dem Mitnehmer (120) aus der ersten in die zweite Stellung der Mitnehmer an der Innenseite des Schenkels (225) angeordnet ist.

4. Betätigungsvorrichtung (112) einer zweigeteilten aufklappbaren Fahrzeugheckklappe nach Anspruch 1, **dadurch gekennzeichnet, dass** beim Verstellen der Sperrscheibe (125) mit dem Mitnehmer (120) aus der ersten in die zweite Stellung der Mitnehmer (120) in der Absenkung (226) im oberen Bereich des Schenkels (225) angeordnet ist.

## Claims

1. An actuating device (112) of a two-part fold-up vehicle tailgate, which comprises a locking disc (125) arranged pivotably on the carrier and a lock plate (128) with a recess (139), into which a driver (120) at least partially engages, wherein
the lock plate (125) has the legs (225, 229), which form an elongate recess (250) with an open end (252) and a closed end (251), **characterized in that** the lock plate (128) has a guide surface (228) in its upper area (227), which is designed as a narrowing of the end of the upper area (227), and wherein
the driver (120) works togetherwhen moving the locking disc (125) with the driver (12) from the first into the second position without interposition with the guide surface (228) in such a manner that the locking disc (125) makes the movements in the Y and Zdirection, that is, is moved into the second position (Y direction) and at the same time is pressed towards the axis (127) of the locking disc (Z direction).

2. An actuating device (112) of a two-part fold-up vehicle tailgate according to Claim 1, **characterized in that** the leg (225) of the locking disc (125) has the shape of a hook with a lowering (226) in the upper part of the leg (225).

3. An actuating device (112) of a two-part fold-up vehicle tailgate according to Claim 1, **characterized in that** when moving the locking disc (125) with the driver (120) from the first into the second position the driver is arranged on the inner side of the leg (225).

4. An actuating device (112) of a two-part fold-up vehicle tailgate according to Claim 1, **characterized in that** when moving the locking disc (125) with the driver (120) from the first into the second position the driver (120) is arranged in the lowering (226) in the upper area of the leg (225).

## Revendications

1. Dispositif d'actionnement (112) d'un hayon de véhicule relevable en deux parties qui comprend un disque de blocage (125) disposé de façon pivotante sur le support et une plaque de blocage (128) avec un creux (139) dans lequel engrène au moins partiellement un élément d'entraînement (120),
le disque de blocage (125) présentant les branches (225, 229) qui forment un creux (250) allongé avec une extrémité ouverte (252) et une extrémité (251) fermée, **caractérisé en ce que** la plaque de blocage (128) présente dans sa zone (227) supérieure une surface de guidage (228) qui est réalisée en tant que rétrécissement de l'extrémité de la zone (227) supérieure, et
l'élément d'entraînement (120), lors du déplacement du disque de blocage (125) avec l'élément d'entraînement (120) à partir de la première position dans la deuxième position sans position intermédiaire, coopère avec la surface de guidage (228) de telle sorte que le disque de blocage (125) effectue les mouvements dans la direction Y et la direction Z, c'est-dire est déplacé dans la deuxième position (direction Y) et en même temps est pressé vers l'axe (127) du disque de blocage (direction Z).

2. Dispositif d'actionnement (112) d'un hayon de véhicule relevable en deux parties selon la revendication 1, **caractérisé en ce que** la branche (225) du disque de blocage (125) présente la forme d'un crochet avec un abaissement (226) dans la partie supérieure de la branche (225).

3. Dispositif d'actionnement (112) d'un hayon de véhicule relevable en deux parties selon la revendication 1, **caractérisé en ce que,** lors du déplacement du disque de blocage (125) avec l'élément d'entraînement (120) à partir de la première position dans la deuxième position, l'élément d'entraînement est disposé sur le côté intérieur de la branche (225) .

4. Dispositif d'actionnement (112) d'un hayon de véhicule relevable en deux parties selon la revendication 1, **caractérisé en ce que,** lors du déplacement du disque de blocage (125) avec l'élément d'entraînement (120) à partir de la première position dans la deuxième position, l'élément d'entraînement (120) est disposé dans l'abaissement (226) dans la zone supérieure de la branche (225).
